# EUROPÄISCHE PATENTSCHRIFT

(11) **EP 3 430 304 B1**
(45) Veröffentlichungstag und Bekanntmachung des Hinweises auf die Patenterteilung: **29.04.2020**
(21) Anmeldenummer: 17717611.2
(22) Anmeldetag: 14.03.2017
(51) Int. Cl.: F16M 7/00, F16M 9/00

(54) **SOCKELELEMENT ZUR LASTABTRAGENDEN AUFNAHME EINES GEHÄUSEMODULS EINES SELBSTBEDIENUNGSAUTOMATEN**
SOCKET ELEMENT FOR RECEIVING A HOUSING MODULE OF A SELF-SERVICE MACHINE IN A LOAD-BEARING MANNER
ÉLÉMENT SOCLE POUR RECEVOIR AVEC TRANSFERT DE CHARGE UN MODULE DE BOÎTIER D'UN DISTRIBUTEUR AUTOMATIQUE

(30) Priorität: 14.03.2016 DE 202016101397 U
(43) Veröffentlichungstag der Anmeldung: 23.01.2019
(73) Patentinhaber: KEBA AG, 4041 Linz (AT)
(72) Erfinder: HAIDVOGL, Franz Engelbert, 4694 Ehrendorf (AT)
(74) Vertreter: Burger, Hannes
(86) Internationale Anmeldenummer: PCT/AT2017/060064
(87) Internationale Veröffentlichungsnummer: WO 2017/156563

(56) Entgegenhaltungen:
- ES-A1- 2 344 394
- GB-A- 2 297 803
- US-A- 4 917 345

## Beschreibung

Die Erfindung betrifft ein Sockelelement zur lastabtragenden Aufnahme eines Gehäusemoduls eines Selbstbedienungsautomaten.

Aus der AT 508 901 B1 derselben Anmelderin ist ein Fundamentsystem zur lastabtragenden Aufnahme eines Gehäuses oder von wenigstens einem Gehäusemodul eines Selbstbedienungsautomaten bekannt. Das Fundamentsystem umfasst wenigstens ein Sockelelement, welches wenigstens eine Abstützfläche für ein Gehäuse oder für wenigstens ein Gehäusemodul eines Selbstbedienungsautomaten aufweist. Dabei umfasst das Sockelelement einen Betonkörper und wenigstens ein darauf abgestütztes, metallisches Tragelement, an welchem-die wenigstens eine Abstützfläche für ein Gehäuse oder Gehäusemodul eines Selbstbedienungsautomaten ausgebildet ist und das metallische Tragelement ist mittels wenigstens einer Einstellvorrichtung in Bezug auf den Betonkörper des Sockelelementes ausnivellierbar.

Die ES 2 344 394 A1 offenbart einen Sockel zur Montage einer Maschine. Der Sockel weist einen Tragrahmen und eine Sichtblende auf.

Aufgabe der vorliegenden Erfindung war es, ein verbessertes Sockelelement zur Verfügung zu stellen.

Diese Aufgabe wird durch eine Vorrichtung gemäß Anspruch 1 gelöst.

Erfindungsgemäß ist ein Sockelelement zur lastabtragenden Aufnahme eines Gehäusemoduls eines Selbstbedienungsautomaten ausgebildet. Das Sockelelement umfasst: einen Tragerahmen, mit einem Deckenabschnitt und allseitig an der Außenkante des Deckenabschnittes ausgebildeten Mantelabschnitten, wobei der Deckenabschnitt eine Aufnahmefläche zur Aufnahme des Gehäusemoduls aufweist und die Mantelabschnitte der Aufnahmefläche gegenüberliegend der Aufnahmefläche am Deckenabschnitt angeordnet sind; zumindest drei Verstellfüße, welche an der Unterseite des Tragerahmens angeordnet sind und zur Ausnivellierung des Tragerahmens dienen, wobei ein Auflagekopf der Verstellfüße zur Auflage am Untergrund ausgebildet ist; eine Sichtblende, welche zum möglichst bündigen Abschluss des Sockelelementes mit dem Untergrund ausgebildet ist. Die Sichtblende ist an der Innenseite des Tragerahmens angeordnet und relativ zum Tragerahmen zwischen einer oberen Einsatzstellung und einer unteren Einsatzstellung verschiebbar.

Von Vorteil an der erfindungsgemäßen Ausbildung des Sockelelementes ist, dass die Sichtblende dazu verwendet werden kann, um einen Tragerahmen ausnivelliert an einem unebenen Untergrund aufstellen zu können. Insbesondere kann dabei durch die Sichtblende ein an den Untergrund angepasster Abschluss des Sockelelementes erreicht werden, sodass der innenliegende Bereich des Tragerahmens von außen nicht einsehbar bzw. zugänglich ist. Dies bringt mehrere Vorteile mit sich. Zum einen kann dadurch vermindert werden bzw. vermieden werden, dass Schmutz von außen unter den Tragerahmen gelangt. Zum anderen kann weitestgehend unterbunden werden, dass sich jemand in verbrecherischer Absicht Zugriff zum Innenraum des Automaten schafft.

Weiters kann es zweckmäßig sein, wenn die Sichtblende zumindest ein erstes Sichtblendensegment und ein zweites Sichtblendensegment umfasst, wobei die beiden Sichtblendensegmente unabhängig voneinander relativ zum Tragerahmen verschiebbar sind. Von Vorteil ist hierbei, dass die in einzelne Segmente aufgeteilte Sichtblende partiell an die Unebenheiten des Untergrundes angepasst werden kann. Dadurch kann rundum verlaufend ein möglichst lückenloser Abschluss des Sockelelementes zum Untergrund erreicht werden.

Ferner kann vorgesehen sein, dass der Tragerahmen als Blechumformteil ausgebildet ist, wobei die Mantelabschnitte als an den Deckenabschnitt anschließende Biegelaschen ausgebildet sind. Von Vorteil an dieser Maßnahme ist hierbei, dass ein Tragerahmen, welcher als Blechumformteil ausgebildet ist, besonders in der Serienfertigung einfach und kostengünstig hergestellt werden kann. Darüber hinaus kann ein derartiger Tragerahmen eine große Formstabilität aufweisen und daher sehr gut zur Aufnahme großer Lasten geeignet sein. Insbesondere durch die Ausbildung von Biegelaschen wird darüber hinaus erreicht, dass der Tragerahmen möglichst keine spitzen Kanten aufweist und daher das Verletzungsrisiko, welches vom Tragerahmen ausgeht, möglichst geringgehalten werden kann. Außerdem kann ein derartig ausgebildeter Tragerahmen eine möglichst schöne Formgebung aufweisen.

Darüber hinaus kann vorgesehen sein, dass die einzelnen Mantelabschnitte an den Eckstößen mittels einer thermischen Fügeverbindung, wie etwa einer Schweißverbindung, miteinander verbunden sind. Von Vorteil ist hierbei, dass durch diese Maßnahme die Stabilität des Tragerahmens zusätzlich verbessert werden kann. Darüber hinaus kann dadurch auch das optische Erscheinungsbild des Tragerahmens bei entsprechend qualitativer Ausführung der Schweißnaht gesteigert werden.

Vorteilhaft ist auch eine Ausprägung, gemäß welcher vorgesehen sein kann, dass die Sichtblende als Blechumformteil ausgebildet ist. Von Vorteil ist hierbei, dass ein derartiges Blechumformteil im Rohzuschnitt einfach aus einer ebenen Blechplatte, beispielsweise mittels einem Laserschneideverfahren, zuzuschneiden ist. Anschließend kann durch einfache Biegung dieses Zuschnittes die Sichtblende hergestellt werden. Darüber hinaus ist von Vorteil, dass eine durch ein derartiges Biegeverfahren hergestellte Sichtblende aufgrund des Herstellverfahrens eine hohe Formgenauigkeit aufweisen kann.

Gemäß einer Weiterbildung ist es möglich, dass am Tragerahmen zumindest ein Fixierelement zum Fixieren der Sichtblende ausgebildet ist, wobei in der Sichtblende eine schlitzartige Ausnehmung ausgebildet ist, in welche das Fixierelement eingreift. Von Vorteil ist hierbei, dass die Sichtblende mittels dem Fixierelement gegen Verrutschen gesichert werden kann und dadurch erreicht werden kann, dass die Sichtblende unbeabsichtigt oder auch beabsichtigt von außen verschoben werden kann, um das Innere des Tragerahmens zugängig zu machen. Durch die schlitzartige Ausnehmung kann erreicht werden, dass die Sichtblende geführt wird. Insbesondere kann vorgesehen sein, dass das Fixierelement einen Gewindestift umfasst, welcher am Tragerahmen befestigt ist und darüber hinaus eine Mutter umfasst, welche mit dem Gewindestift zusammenwirkt, wobei die Sichtblende zwischen Mutter und Tragerahmen geklemmt werden kann.

Ferner kann es zweckmäßig sein, wenn der Tragerahmen an einem der Mantelabschnitte zumindest eine Bohrung zum Verbinden von zwei Tragerahmen mittels einem Befestigungsmittel aufweist, wobei die Sichtblende an einer zum mit der Bohrung versehenen Mantelabschnitt korrespondierenden Seite eine Ausnehmung aufweist um sowohl in der oberen Einsatzstellung als auch in der unteren Einsatzstellung nicht mit dem Befestigungsmittel zu kollidieren. Von Vorteil ist hierbei, dass durch diese Maßnahme mehrere Tragerahmen aneinander gereiht werden können und fest miteinander verbunden werden können. Dadurch können beispielsweise mehrere aneinander gereihte Tragerahmen zur Aufnahme von mehreren nebeneinander anzubringenden Selbstbedienungsautomaten ausgebildet sein. Alternativ dazu können auch mehrere aneinander gereihte Tragerahmen zur Aufnahme eines Selbstbedienungsautomaten mit Übergröße ausgebildet sein.

Darüber hinaus kann vorgesehen sein, dass an jenem Mantelabschnitt in welchem die Bohrung zum Verbinden von zwei Tragerahmen angeordnet ist zusätzlich ein Durchlass zur Durchführung von Kabel angeordnet ist. Von Vorteil ist hierbei, dass durch diese Maßnahme mehrere nebeneinander aufgestellte Selbstbedienungsautomaten, beispielsweise durch Kommunikationsleitungen und/oder Stromversorgungsleitungen miteinander verbunden sein können.

Weiters kann vorgesehen sein, dass der Deckenabschnitt eine oder mehrere Ausnehmungen aufweist durch welche zumindest die Verstellfüße und/oder die Fixierelemente zum Fixieren der Sichtblende zugänglich sind. Von Vorteil ist hierbei, dass die Verstellfüße bzw. die Sichtblende bei bereits positioniertem Sockelelement zugänglich sind, sodass eine Ausnivellierung des Tragerahmens bzw. das richtige Positionieren der Sichtblende einfach möglich ist. Natürlich können auch weitere Ausnehmungen vorgesehen sein, durch welche weitere im Inneren des Tragerahmens liegende Bauteile zugänglich sind.

Gemäß einer besonderen Ausprägung ist es möglich, dass die Sichtblende an einer dem Untergrund zuzuwendenden Unterseite eine Ausnehmung aufweist. Von Vorteil ist hierbei, dass eine derartige Ausnehmung als Durchführung für Kabel dienen kann.

Entsprechend einer vorteilhaften Weiterbildung kann vorgesehen sein, dass am Tragerahmen ein U-Profil angeordnet ist, welches eine Bohrung zur Aufnahme der Verstellfüße aufweist, wobei in der Bohrung ein Gewinde ausgebildet ist oder mit dem U-Profil eine Gewindemutter verschweißt ist, und die Verstellfüße durch Verdrehung bezüglich deren Längsachse relativ zum U-Profil und somit zum Tragerahmen verstellbar sind. Von Vorteil ist hierbei, dass eine derartige Konstruktion überraschend stabil ist und darüber hinaus eine gute Möglichkeit zur Aufnahme der Verstellfüße bzw. in weiterer Folge zum Ausnivellieren des Tragerahmens bietet.

Insbesondere kann es vorteilhaft sein, wenn ein Niederhalterelement ausgebildet ist, welches zumindest eine Fixierbohrung aufweist in welche einer der Verstellfüße einbringbar ist, wobei ein Durchmesser der Fixierbohrung kleiner ist als ein Durchmesser des Auflagekopfes und wobei das Niederhalterelement eine Ankerbohrung aufweist, in welche ein Befestigungselement einbringbar ist, wodurch das Niederhalterelement am Untergrund fixierbar ist. Ein derartiges Niederhalterelement kann dazu dienen, um das Sockelelement am Untergrund verankern zu können und somit zum einen die Aufstellstabilität des Selbstbedienungsautomaten zu verbessern und darüber hinaus einen Diebstahl des Selbstbedienungsautomaten weitestgehend zu unterbinden.

Schließlich kann vorgesehen sein, dass das Niederhalterelement zwei Fixierbohrungen aufweist, welche derart am Niederhalterelement angeordnet sind, dass sie jeweils mit einem Verstellfuß zusammenwirken und dass die Ankerbohrung zwischen den beiden Fixierbohrungen angeordnet ist. Von Vorteil ist hierbei, dass das Niederhalterelement einfach herzustellen ist und die Fixierung des Sockelelementes mittels dem Niederhalterelement eine große Festigkeit bzw. Stabilität aufweisen kann.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht von schräg unten auf ein Sockelelement mit schematisch dargestelltem Selbstbedienungsautomaten;
- Fig. 2: eine perspektivische Ansicht von schräg oben auf das Sockelelement mit schematisch dargestelltem Selbstbedienungsautomaten;
- Fig. 3: eine Querschnittdarstellung des Sockelelementes gemäß der Schnittlinie III-III in Fig. 2;
- Fig. 4: eine perspektivische Explosionsdarstellung des Sockelelementes;
- Fig. 5: eine Schnittdarstellung eines weiteren Ausführungsbeispiels eines Verstellfußes des Sockelelementes;
- Fig. 6: eine Schnittdarstellung eines weiteren Ausführungsbeispiels eines Verstellfußes des Sockelelementes;
- Fig. 7: eine perspektivische Ansicht eines Selbstbedienungsautomaten mit mehreren aneinander gereihten Sockelelementen;
- Fig. 8: eine perspektivische Ansicht von schräg oben auf das Sockelelement mit schematisch dargestelltem Selbstbedienungsautomaten und Sichtblende.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

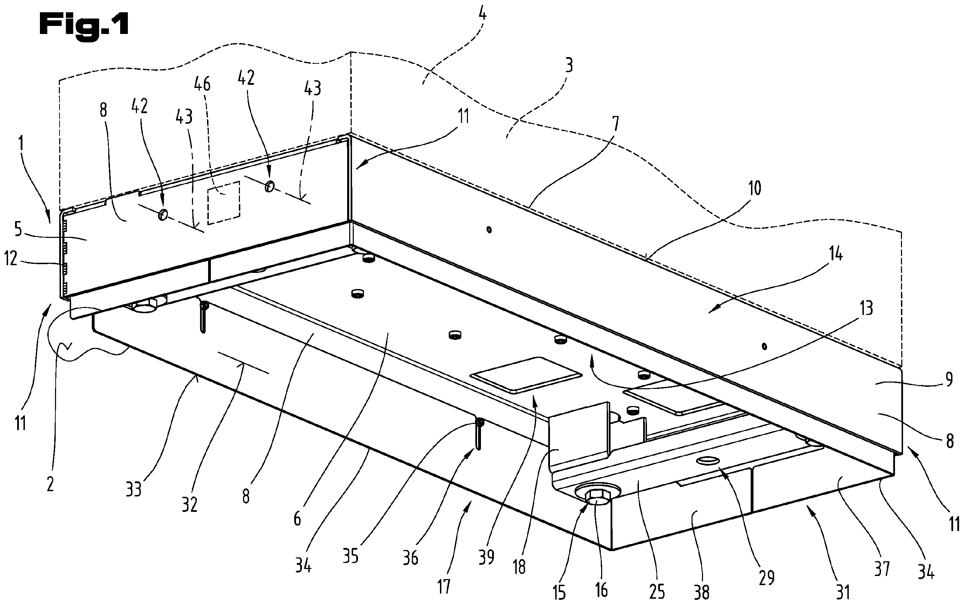

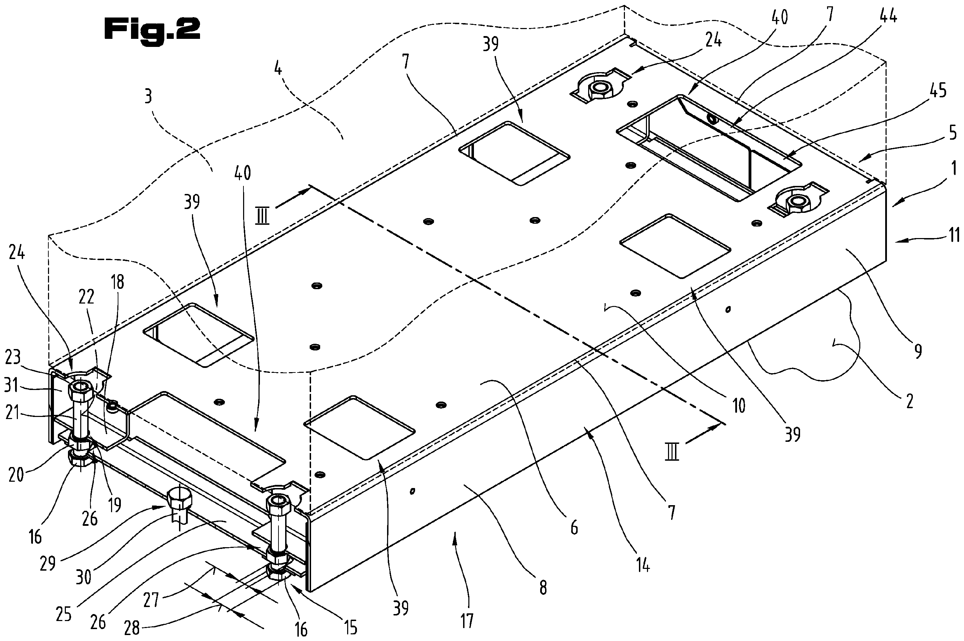

Fig. 1 zeigt eine perspektivische Ansicht von schräg unten auf ein Sockelelement 1. In der Fig. 2 ist das Sockelelement 1 in einer Ansicht von schräg oben dargestellt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Das Sockelelement 1 wird am Untergrund 2 befestigt bzw. aufgestellt. Der Untergrund 2, an welchem das Sockelelement befestigt bzw. aufgestellt wird, kann beispielsweise in Form eines Betonbodens oder in Form eines Asphaltbodens oder dergleichen gebildet sein und kann sich innerhalb eines Gebäudes oder auch im Außenbereich befinden. Natürlich kann der Untergrund 2 auch eine sonstige Art von Bodenbelag aufweisen bzw. kann der Untergrund 2 auch durch natürlich belassenen Boden gebildet sein.

Das Sockelelement 1 dient zur Aufnahme eines Gehäusemoduls 3 eines Selbstbedienungsautomaten 4. Das Sockelelement 1 umfasst einen Tragerahmen 5, welcher zur lastabtragenden Aufnahme des Gehäusemoduls 3 des Selbstbedienungsautomaten 4 ausgebildet ist. Der Tragerahmen 5 weist einen Deckenabschnitt 6 auf, welcher vorzugsweise in Form einer ebenen Fläche ausgebildet ist. Dieser Deckenabschnitt 6 wird allseitig an einer Außenkante 7 von Mantelabschnitten 8 umgeben.

Wie im vorliegenden Ausführungsbeispiel dargestellt, können die Mantelabschnitte 8 in Form einer Biegelasche 9 ausgeführt sein, wobei der Tragerahmen 5 als Blechumformteil ausgebildet sein kann. Ein derartiger als Blechumformteil ausgeführter Tragerahmen 5 kann beispielsweise dadurch gebildet werden, dass aus einem ebenen Blech eine Rohplatte ausgeschnitten wird, welche eine vorgegebene Außenkontur aufweist. Die Rohplatte kann beispielsweise durch ein Laserverfahren zugeschnitten werden. Anschließend können die Mantelabschnitte 8, welche als Biegelaschen 9 ausgeführt sind, gebogen werden, sodass sich die dargestellte, räumliche Formgebung ergibt. Wie aus Fig. 1 besonders gut ersichtlich, ist der Mantelabschnitt 8 dabei derart am Deckenabschnitt 6 angeordnet, dass eine Aufnahmefläche 10 zur Aufnahme des Gehäusemoduls 3 an der dem Mantelabschnitt 8 gegenüberliegenden Seite des Deckenabschnittes 6 ausgebildet ist. Mit anderen Worten ausgedrückt, weist der Tragerahmen 5 in etwa die Form einer Schale auf, welche mit der offenen Seite nach unten aufgestellt ist.

Weiters kann vorgesehen sein, dass an zumindest einem Eckstoß 11 zweier zueinander benachbarter Mantelabschnitte 8 eine thermische Fügeverbindung 12 ausgebildet ist. Die thermische Fügeverbindung 12 kann beispielsweise in Form einer Schweißnaht ausgebildet sein. Eine derartige Schweißnaht kann entweder durchgehend oder punktuell bzw. abgesetzt ausgebildet sein. Bevorzugt ist vorgesehen, dass alle Eckstöße 11 eine derartige, thermische Fügeverbindung 12 aufweisen. Die thermische Fügeverbindung 12 kann entweder an einer Innenseite 13 des Tragerahmens 13 angeordnet sein, oder an einer Außenseite 14 des Tragerahmens 13.

In einer weiteren nicht dargestellten Ausführungsvariante kann auch vorgesehen sein, dass die Mantelabschnitte 8 nicht als Biegelasche 9 ausgeführt sind, sondern dass die Mantelabschnitte 8 aus ebenen Blechteilen bzw. Flacheisen gebildet sind und an der Außenkante 7 des Deckenabschnittes 6 mit diesen Verschweißt sind. Natürlich können bei einer derartigen Ausführungsvariante die Eckstöße 11 zweier zueinander benachbarter Mantelabschnitte 8 ebenfalls durch eine thermische Fügeverbindung 12 miteinander verbunden sein.

Weiters ist vorgesehen, dass das Sockelelement 1 mehrere Verstellfüße 15 aufweist, welche mit dem Tragerahmen 5 verbunden ist, wobei ein Auflagekopf 16 des Verstellfußes 15 am Untergrund 2 aufliegt und dadurch der Tragerahmen 5 am Untergrund 2 abgestützt wird. Insbesondere kann vorgesehen sein, dass die Verstellfüße 15 an einer Unterseite 17 des Tragerahmens 5 angeordnet sind bzw. mit dem Tragerahmen verbunden sind.

Die Verstellfüße 16 sind vorzugsweise derart ausgebildet, dass der Auflagekopf 16 des Verstellfußes 15 einfach relativ zum Tragerahmen 5 verstellbar ist. Dadurch können die Verstellfüße 15 zum Ausnivellieren des Tragerahmens 5 eingesetzt werden, wodurch insbesondere erreicht werden kann, dass die Aufnahmefläche 10 horizontal ausgerichtet wird. In der dargestellten Ausführungsvariante sind vier Verstellfüße 15 vorgesehen. Um ein Ausnivelieren des Sockelelementes 1 durchführen zu können, ist es vorteilhaft, wenn zumindest drei Verstellfüße 15 am Tragerahmen 5 ausgebildet sind.

Die Verstellfüße 15 können verschiedenste Verstellmechanismen aufweisen, um den Auflagekopf 16 relativ zum Tragerahmen 5 verstellen zu können. Wie aus einer Zusammenschau der Fig. 1 und 2 ersichtlich, kann beispielsweise vorgesehen sein, dass am Tragerahmen 5 an der zur Aufnahmefläche 10 gegenüberliegenden Seite des Deckenabschnittes 6 ein U-Profil 18 angeordnet ist, welches eine Bohrung 19 aufweist, in welcher der Verstellfuß 15 angeordnet ist. Insbesondere kann vorgesehen sein, dass eine Gewindemutter 20 im Bereich der Bohrung 19 an das U-Profil 18 angeschweißt ist und somit ein Gewindeabschnitt 21 des Verstellfußes 15 in Längsachse 22 des Stellfußes 15 fixiert in der Gewindemutter 20 respektive in der Bohrung 19 aufgenommen ist. Eine Verstellung des Verstellfußes 15 kann durch Verdrehung des Verstellfußes 15 erreicht werden, wobei der Gewindeabschnitt 21 und die Gewindemutter 20 zusammenwirken und die Verdrehbewegung in eine translatorische Bewegung des Verstellfußes 15 übergeführt wird.

Wie aus Fig. 2 gut ersichtlich, kann der Verstellfuß 15 durch eine Schraube gebildet sein, welche von der Unterseite 17 in das U-Profil 18 eingeschraubt ist, wobei der Schraubenkopf als Auflagekopf 16 des Verstellfußes 15 dient.

Weiters kann vorgesehen sein, dass an der dem Schraubenkopf gegenüberliegenden Seite des Gewindeabschnittes 21 eine weitere Gewindemutter 23 angeordnet ist, welche zur Drehmomenteneinleitung in den Verstellfuß 15 dient und somit zum Verstellen des Verstellfußes 15 dient. Die weitere Gewindemutter 23 kann insbesondere durch eine Klebeverbindung bzw. durch eine thermische Fügeverbindung, wie etwa eine Schweißverbindung, mit dem Gewindeabschnitt 21 verbunden sein, um eine Relativbewegung bzw. Relativverdrehung zwischen Gewindeabschnitt 21 und weiterer Gewindemutter 23 zu unterbinden.

Weiters kann vorgesehen sein, dass im Deckenabschnitt 6 eine Ausnehmung 24 ausgebildet ist, durch welche die weitere Gewindemutter 23 bzw. der Verstellfuß 15 von der Außenseite 14 des Tragerahmens 5 zugänglich sind.

Wie aus Fig. 2 ersichtlich, kann vorgesehen sein, dass das U-Profil 18 derart mit dem Deckenabschnitt 6 des Tragerahmens 5 verbunden ist, dass die beiden parallel zueinander liegenden Schenkel des U-Profils 18 am Deckenabschnitt 6 anliegen und der die beiden parallelen Schenkel verbindende Abschnitt des U-Profils 18 vom Deckenabschnitt 6 distanziert angeordnet ist. Die Bohrung 19 ist vorzugsweise in diesem distanzierten Abschnitt des U-Profils 18 ausgebildet. Das U-Profil 18 kann an dessen parallel zueinander liegenden Schenkel mit dem Deckenabschnitt 6 verbunden sein.

Wie aus Fig. 2 weiters ersichtlich, kann vorgesehen sein, dass im Deckenabschnitt 6 im Bereich des U-Profils 18 eine Ausnehmung 24 angeordnet ist, durch welche die weitere Gewindemutter 23 zugänglich ist und somit der Verstellfuß 15 einstellbar ist.

Wie in einer Zusammenschau der Fig. 1 und 2 gut ersichtlich, kann weiters vorgesehen sein, dass ein Niederhalterelement 25 ausgebildet ist, welches beispielsweise zwei Fixierbohrungen 26 aufweist, in welche der Gewindeabschnitt 21 des Verstellfußes 15 eingesteckt wird, wobei durch das Niederhalterelement 25 die Verstellfüße 15, insbesondere der Auflagekopf 16 der Verstellfüße 15 auf den Untergrund 2 angepresst werden können und dadurch das Sockelelement 1 und somit auch der Selbstbedienungsautomat 4 am Untergrund 2 fixiert werden können. Insbesondere ist es zweckmäßig, wenn ein Durchmesser 27 der Fixierbohrung 26 kleiner bemessen ist als ein Durchmesser 28 des Auflagekopfes 16, wodurch die Fixierung des Auflagekopfes 16 erreicht werden kann.

Weiters kann vorgesehen sein, dass mittig des Niederhalterelementes 25 eine Ankerbohrung 29 ausgebildet ist, in welche ein Befestigungselement 30 zum Befestigen des Niederhalterelementes 25 am Untergrund 2 eingebracht werden kann. Das Befestigungselement 30 kann beispielsweise in Form einer Betonschraube ausgebildet sein oder kann beispielsweise auch mittels einem Dübel im Untergrund 2 befestigt werden. Im gezeigten Ausführungsbeispiel ist die Ankerbohrung 29 mittig zwischen den beiden Fixierbohrungen 26 angeordnet. In einem weiteren Ausführungsbeispiel ist es jedoch auch denkbar, dass die Ankerbohrung 29 an anderer Stelle im Niederhalterelement 25 angeordnet ist oder dass im Niederhalterelement 25 mehrere Ankerbohrungen 29 ausgebildet sind. Um das Niederhalterelement 25 möglichst stabil auszuführen, kann vorgesehen sein, dass dieses, wie besonders gut in Fig. 1 ersichtlich, durch ein U-Profil gebildet wird. Das Niederhalterelement 25 kann jedoch auch durch jede andere Art von Material, beispielsweise durch ein Flacheisen, gebildet sein.

Weiters ist vorgesehen, dass das Sockelelement 1 eine Sichtblende 31 umfasst, welche an der Innenseite 13 des Tragerahmens 5 angeordnet ist. Insbesondere ist vorgesehen, dass die Sichtblende 31 an den Mantelabschnitten 8 des Tragerahmens 5 anliegt bzw. an diesen befestigt ist und in vertikaler Richtung relativ zum Tragerahmen 5 verschiebbar ist. Insbesondere ist vorgesehen, dass die Sichtblende 31 zwischen einer oberen Einsatzstellung 32 und einer unteren Einsatzstellung 33 verschiebbar ist. Dadurch kann nach dem Ausnivellieren des Tragerahmens 5 die Sichtblende 31 derart an den Untergrund 2 angepasst werden, dass das Sockelelement 1 einen Augenfälligen Abschluss mit dem Untergrund 2 aufweist. Insbesondere ist vorgesehen, dass die Sichtblende 31 soweit in Richtung Untergrund 2 verschoben wird, sodass eine Unterseite 34 der Sichtblende 31 am Untergrund 2 aufliegt.

Weiters kann vorgesehen sein, dass im Tragerahmen 5 ein Fixierelement 35 angeordnet ist, welches zum Fixieren der Sichtblende 31 dient. Dazu kann in der Sichtblende 31 eine schlitzartige Ausnehmung 36 ausgebildet sein, welche mit dem Fixierelement 35 in Eingriff steht. Insbesondere kann vorgesehen sein, dass das Fixierelement 35 einen Gewindezapfen oder eine Schraube umfasst, welche mit dem Mantelabschnitt 8 des Tragerahmens 5 verbunden ist und welche in die Innenseite 13 des Tragerahmens 5 hineinsteht. Dieser Gewindezapfen bzw. die Schraube können mit der schlitzartigen Ausnehmung 36 der Sichtblende 31 korrespondieren. Weiters kann eine Gewindemutter vorgesehen sein, welche mit dem Gewindezapfen zusammenwirkt und zum Klemmen der Sichtblende 31 dient.

Um die Flexibilität der Sichtblende 31 zu erhöhen, kann vorgesehen sein, dass die Sichtblende 31 in ein erstes Sichtblendensegment 37 und ein zweites Sichtblendensegment 38 aufgeteilt ist. In weiteren Ausführungsbeispielen ist es auch denkbar, dass nicht nur zwei Sichtblendensegmente 37, 38 ausgebildet sind, sondern dass eine Vielzahl von Sichtblendensegmenten ausgebildet ist. Je größer die Anzahl von Sichtblendensegmenten ist, desto besser kann die Unterseite 34 der Sichtblende 31 an den Untergrund 2 angepasst werden, auch wenn der Untergrund 2 beispielsweise eine wellige Form aufweist.

Weiters kann vorgesehen sein, dass im Deckenabschnitt 6 eine Ausnehmung 39 angeordnet ist, durch welche das Fixierelement 35 zugänglich ist, um die Sichtblende 31 nach erfolgter Anpassung an den Untergrund 2 fixieren zu können.

Wie aus den Fig. 1 und 2 weiters ersichtlich, kann vorgesehen sein, dass im Deckenabschnitt 6 eine weitere Ausnehmung 40 ausgebildet ist, durch welche das in der Ankerbohrung 29 des Niederhalterelements 25 angeordnete Befestigungselement 30 in den Untergrund 2 eingebracht werden kann. Diese Ausnehmung 40 ist vorzugsweise so groß ausgebildet, dass beispielsweise der Kopf einer Bohrmaschine durch diese hindurchgeführt werden kann, um im Untergrund 2 ein Loch zur Aufnahme des Befestigungselements 30 herstellen zu können.

Darüber hinaus können im Deckenabschnitt 6 ein oder mehrere Befestigungsinserts 41 ausgebildet sein, welche zur Befestigung des Gehäusemoduls 3 am Tragerahmen 5 dienen. Die Befestigungsinserts 41 können beispielsweise durch eine Gewindemutter gebildet sein, welche am Deckenabschnitt 6 befestigt sein können. In einer Alternativvariante kann auch vorgesehen sein, dass die Befestigungsinserts 41 dadurch gebildet sind, dass direkt im Deckenabschnitt 6 ein Gewinde zur Aufnahme von Schrauben ausgebildet ist.

Weiters kann vorgesehen sein, dass im Mantelabschnitt 8 des Tragerahmens 5 eine oder mehrere Bohrungen 42 ausgebildet ist, welche zur Aufnahme von Befestigungsmittel 33 zum Verbinden von zwei benachbart zueinander angeordneten Tragerahmen 5 dienen. Somit können mehrere Tragerahmen 5 aneinander gereiht werden und durch das Befestigungsmittel 43 miteinander verbunden werden.

Weiters kann vorgesehen sein, dass an jener Seite 44 der Sichtblende 31, welche im Bereich der Bohrungen 42 angeordnet ist, eine Ausnehmung 45 vorgesehen ist, welche zu dem Zwecke ausgebildet ist, dass die Sichtblende 31 frei zwischen der oberen Einsatzstellung 32 und der unteren Einsatzstellung 33 bewegbar ist, ohne dabei mit einem der Befestigungsmittel 43 zum Verbinden von zwei Tragerahmen 5 zu kollidieren. Weiters kann vorgesehen sein, dass im Mantelabschnitt 8 im Bereich der Bohrungen 42 ein Durchlass 46 ausgebildet ist, welcher zur Durchführung von Kabeln dient.

Weiters kann vorgesehen sein, dass an der Unterseite 34 der Sichtblende 31 eine Ausnehmung 47 ausgebildet ist, welche ebenfalls zum Durchführen von Kabeln dienen kann. Damit korrespondierend kann am Tragerahmen 5 ebenfalls eine Ausnehmung 48 ausgebildet sein. Weiters kann vorgesehen sein, dass eine Höhe 49 der Sichtblende 31 zwischen 50 % und 100 % der Lichten Höhe 50 des Tragerahmens 5 beträgt. Bevorzugt kann vorgesehen sein, dass die Höhe 49 der Sichtblende 31 zwischen 85 % und 95 % der Lichten Höhe 50 des Tragerahmens 5 beträgt. Bei diesem Wert ergibt sich ein Optimum der Einstellbarkeit der Sichtblende 31 bei gleichzeitiger Stabilität der Sichtblende 31.

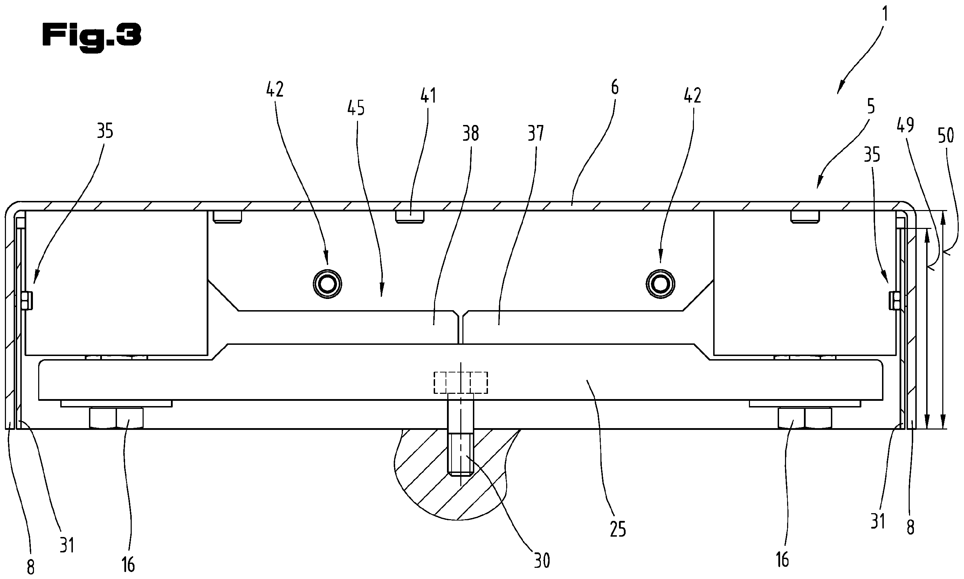

In der Fig. 3 ist das Sockelelement 1 in einer Schnittdarstellung dargestellt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

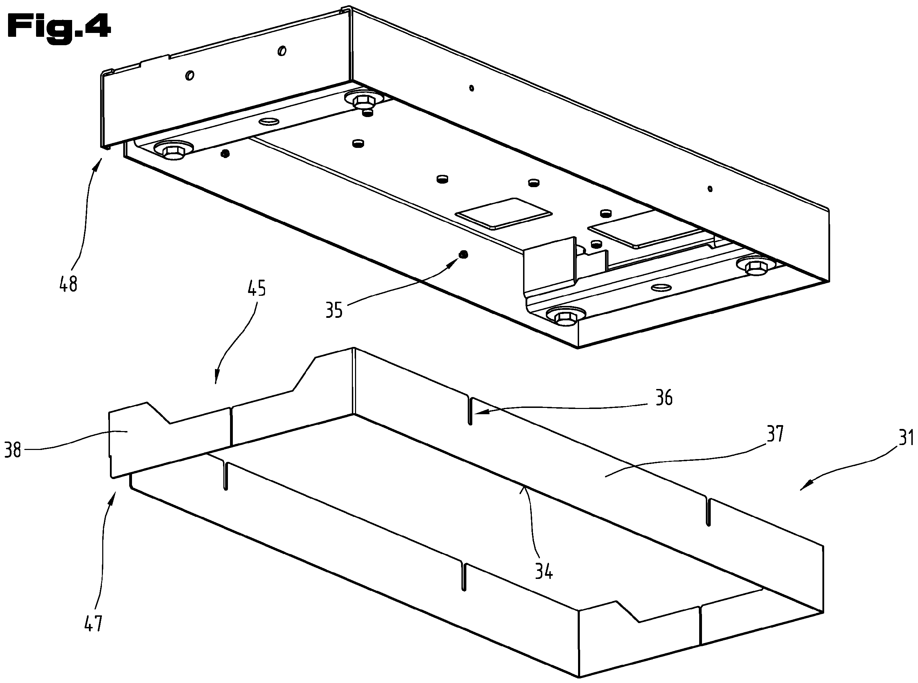

In der Fig. 4 ist das Sockelelement 1 in einer Explosionsansicht dargestellt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Anhand einer Zusammenschau der Fig. 1 bis 4 wird nun eine mögliche Variante zum Aufbau des Sockelelementes 1 bzw. des Selbstbedienungsautomaten 4 beschrieben.

In einem ersten Verfahrensschritt wird das Sockelelement 1 bereitgestellt, wobei die Verstellfüße 15 sowie das Niederhalterelement 25 am Tragerahmen 5 befestigt sind. Auch die Sichtblende 31 ist in ihrer oberen Einsatzstellung 32 am Tragelement 5 fixiert.

Anschließend wird das Tragelement 5 in seiner vorbestimmten Position am Untergrund 2 abgestellt und mittels der Verstellfüße 15 der Deckenabschnitt 6 des Tragerahmens 5 horizontal ausnivelliert. Nach Beendigung dieses Nivelliervorganges kann das Niederhalterelement 25 mittels dem Befestigungselement 30, welches in eine im Untergrund 2 vorbereitete Bohrung eingeschraubt wird, am Untergrund 2 fixiert werden. Sowohl zum Verstellen der Verstellfüße 15 als auch zum Einbringen bzw. Festziehen des Befestigungselementes 30 kann beispielsweise mittels einer Ratsche, durch die Ausnehmungen 24, 29 hindurch die Drehmomenten-Einleitung in die jeweiligen Bauteile erfolgen.

Nach dem Ausrichten und Fixieren des Tragerahmens 5 am Untergrund 2 kann das Fixierelement 35 gelockert werden und die Sichtblende 31 bis auf den Untergrund 2 abgesenkt werden. Durch die vorteilhafte Ausbildung bzw. Anordnung der Sichtblende 31 wird diese von der Schwerkraft in Richtung Untergrund 2 bewegt, sodass diese mit deren Unterseite 34 am Untergrund 2 aufliegt und nicht durch zusätzliche Hilfsmittel bzw. durch Eingriff des Montagepersonals in Position gehalten werden muss. Anschließend können die Fixierelemente 35 wieder geschlossen werden und die Sichtblende 31 dadurch in der unteren Einsatzstellung 33 fixiert werden.

In einem abschließenden Verfahrensschritt kann das Gehäusemodul 3 auf dem Sockelelement 1 befestigt werden.

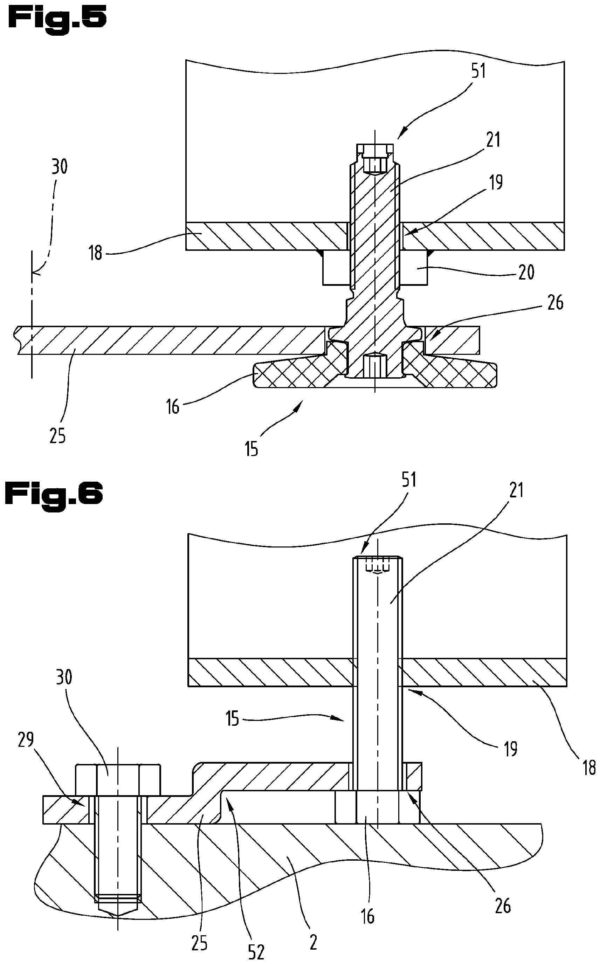

Fig. 5 zeigt eine Schnittdarstellung eines weiteren Ausführungsbeispiels der Ausbildung eines Verstellfußes 15, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann vorgesehen sein, dass der Verstellfuß 15 einen tellerförmigen Auflagekopf 16 aufweist, welcher relativ zum Gewindeabschnitt 21 des Verstellfußes 15 verdrehbar ist. Der Gewindeabschnitt 21 des Verstellfußes 15 kann darüber hinaus einen Drehmomenten-Einleitungsbereich 51 aufweisen, welcher beispielsweise eine Ausnehmung für einen Innensechskantschüssel oder Torx und/oder eine Ausnehmung für einen Schlitz- bzw. Kreuzschlitz-Schraubendreher und dergleichen aufweisen kann. Bei diesem Ausführungsbeispiel kann ebenfalls vorgesehen sein, dass die Gewindemutter 20 mit dem U-Profil 18 durch eine Schweißverbindung verbunden ist.

Die in Fig. 5 dargestellte Ausführungsvariante weist den Vorteil auf, dass beim Ausnivelieren des Tragerahmens 5 der Auflagekopf 16 des Verstellfußes 15 nicht mitgedreht wird und dieser somit zum einen nicht durch eine etwaige Drehbewegung relativ zum Untergrund 2 verrutscht. Zum anderen ist dadurch auch der Gewindeabschnitt 21 des Verstellfußes 15 leichtgängig verdrehbar.

Darüber hinaus kann bei einer derartigen Ausführung wie sie in Fig. 5 beschrieben ist, das Niederhalterelement 25 bereits vor dem Ausnivellieren des Tragerahmens 5 am Boden 2 geklemmt werden, da es nicht notwendig ist, dass zum Ausnivellieren des Tragerahmens 5 der Auflagekopf 16 des Verstellfußes 15 frei verdrehbar ist.

Wie aus Fig. 5 weiters ersichtlich, kann vorgesehen sein, dass das Niederhalterelement 25 beispielsweise in Form eines Flacheisen ausgebildet ist.

Fig. 6 zeigt ein weiteres Ausführungsbeispiel des Verstellfußes, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass pro Verstellfuß 15 ein Niederhalterelement 25 ausgebildet ist, welches einen Ansatz 52 aufweist, um mittels dem Befestigungselement 30 am Untergrund 2 verschraubt werden zu können und dadurch den Auflagekopf 16 auf den Untergrund 2 andrücken zu können.

In dem Ausführungsbeispiel in Fig. 6 ist auch dargestellt, dass vorgesehen sein kann, dass die Bohrung 19 im U-Profil 18 ein Gewinde aufweist, welches mit dem Gewindeabschnitt 21 des Verstellfußes 15 zusammenwirkt.

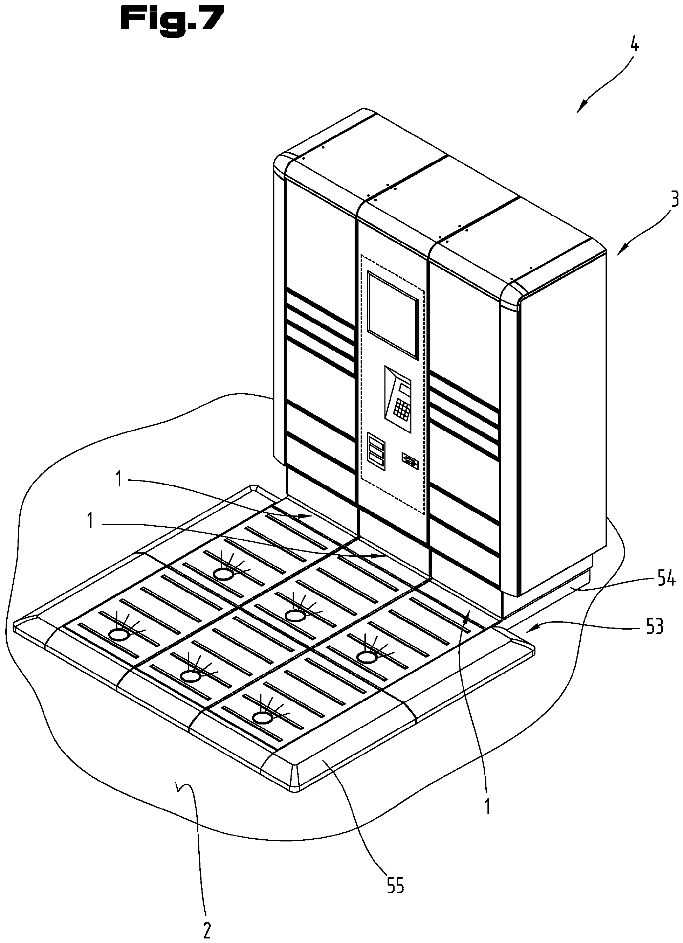

Fig. 7 zeigt eine beispielhafte Ausführungsform des Selbstbedienungsautomaten 4 in Verbindung mit einem erfindungsgemäß ausgebildeten Sockelelement 1, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

In dem Ausführungsbeispiel in Fig. 7 ist das Sockelelement 1 in ein Fundamentsystem 53 integriert. Dieser beispielhaft dargestellte Selbstbedienungsautomat 4 ist als Aufbewahrungsautomat zur vorübergehenden Deponierung einer Mehrzahl von Waren bzw. Gegenständen vorgesehen, welche vom jeweiligen, bestimmungsgemäßen Empfänger rund um die Uhr abholbar sind.

Anstelle des beispielhaft dargestellten Aufbewahrungsautomaten kann der Selbstbedienungsautomat 4 auch durch einen Bankdienstleistungsautomat oder durch einen Verkaufsautomat gebildet sein. Der jeweilige Selbstbedienungsautomat 4 ist bevorzugt an öffentlich zugänglichen Orten aufgestellt und entweder von einem theoretisch unbegrenzten, oder von einem für die Nutzung registrierten, eingeschränkten Personenkreis nutzbar.

Vor allem im Falle eines Selbstbedienungsautomaten 4 für Bankdienstleistungen weist ein solcher Automat zumeist ein einteiliges bzw. aus mehreren Einzelteilen zusammengesetztes, relativ starres bzw. in sich abgeschlossenes Gehäuse auf. In diesem einstückigen Gehäuse sind die jeweils benötigten, technischen Komponenten und Aufbewahrungsräume sowie die gegebenenfalls erforderlichen Betriebsmittel bzw. Waren oder Bezahlungsmittel untergebracht.

Wie aus Fig. 7 weiters ersichtlich, kann vorgesehen sein, dass das Fundamentsystem 53 neben dem Sockelelement 1 auch einen Betonkörper 54 umfasst, an welchem das Sockelelement 1 angeordnet sein kann.

Außerdem ist aus Fig. 7 ersichtlich, dass vorgesehen sein kann, dass mehrere Sockelelemente 1 und oder Betonkörper 54 nebeneinander angeordnet sind und so zu einer Einheit verbunden sind.

Der Betonkörper 54 des Fundamentsystems 53 ist vorzugsweise als Fertigbauteil ausgeführt, der am vorgesehenen Aufstellungsort des Selbstbedienungsautomaten 4 positioniert bzw. abgestellt wird. Insbesondere wird der Betonkörper 54 mittels einer Gießform hergestellt, indem Fließbeton, insbesondere ein Gemisch aus Gesteinskorn und Zement, in eine entsprechende Gießform eingegossen wird. Nach ausreichender Aushärtung wird dieser Formkörper aus der Gießform entnommen bzw. entformt und nach Erreichung einer ausreichenden Endhärte wird dieser Betonkörper 54 als vorgefertigte Teilkomponente für das Fundamentsystem 53 bereitgestellt. Die Masse des Betonkörpers 54 ist vorzugsweise derart gewählt, dass eine Manipulation, insbesondere eine Verlegung, ohne maschinelle Hilfsmittel möglich ist. Das heißt, dass die Masse des Betonkörpers 54 ausreichend gering sein soll, um ohne maschinelle Hebe- oder Transportmittel, d.h. ohne Kranarbeiten, am jeweils gewünschten Aufstellungsort positioniert werden zu können. Insbesondere ist eine manuelle Verlegbarkeit und Tragbarkeit des Betonkörpers 54 vorteilhaft. Die Verwendung eines manuell verfahrbaren Palettenhebers oder eines Sackkarrens ist dabei nicht als maschinelles Hilfsmittel zu verstehen.

Der entsprechend vorgefertigte Betonkörper 54 kann direkt auf einem herkömmlichen Schotter-, Asphalt- oder Steinboden abgestellt werden, wie dies vor allem dann der Fall ist, wenn der Selbstbedienungsautomat 4 im Außenbereich aufgestellt werden soll. Der Betonkörper 54 kann aber auch auf beliebigen Pflasterungen oder sonstigen Bodenbelägen im Innenbereich von Hallen oder Gebäuden abgestellt werden. Der Untergrund 2 muss lediglich ausreichend tragfähig sein, um ein allmähliches Einsinken und somit eine allmähliche, einseitige Neigung des jeweiligen Automatengehäuses hintan zu halten. Im Falle eines ausreichend tragfähigen Wiesen-Untergrundes oder Erdbodens ist es lediglich erforderlich, die relativ weiche Oberflächenschicht abzutragen und mittels einer ausreichend dicken Schotterbettung einen Untergrund 2 zu schaffen, auf welchem der vorgefertigte Betonkörper 54 oder eine Mehrzahl von aneinander gereihten Betonkörpern 54 direkt abgestellt werden kann.

Wie am besten den Darstellungen in der Fig. 7 zu entnehmen ist, kann zusätzlich vorgesehen sein, dass an zumindest einer Seite, insbesondere an der Vorderseite und/oder an der Rückseite des Betonkörpers 54 zumindest ein Pflasterungselement 55 aus Beton anreihbar ist. Entsprechend einer zweckmäßigen Ausgestaltung ist insbesondere im Bereich der Vorderseite des Betonkörpers 54 ein Pflasterungselement 55 ausgebildet, welches quasi einen gepflasterten Vorbereich bzw. Vorplatz für den Selbstbedienungsautomaten 4 darstellt.

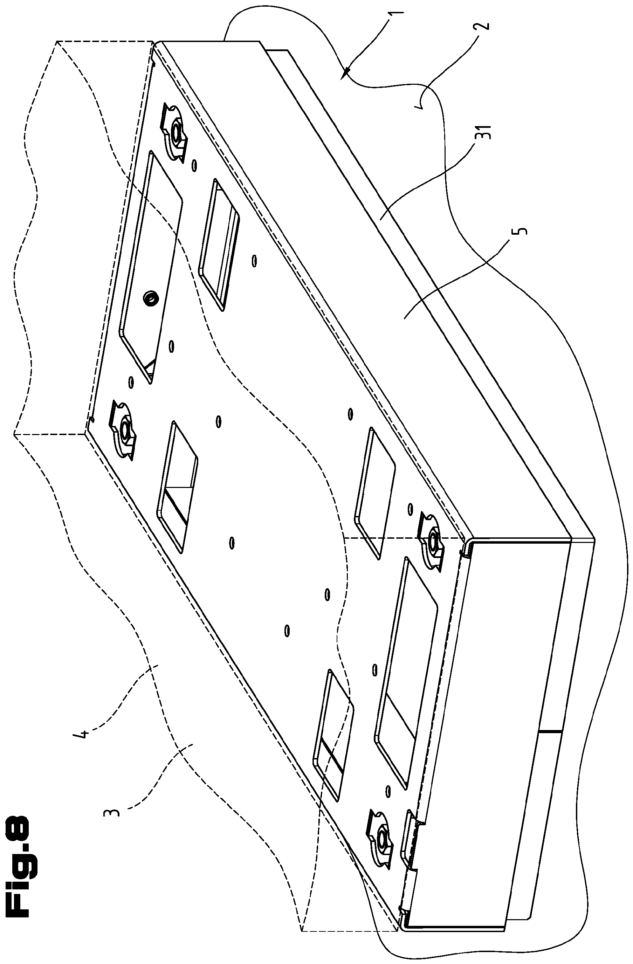

In der Fig. 8 ist das Sockelelement 1 in einer perspektivischen Ansicht von schräg oben dargestellt, wobei die Sichtblende 31 sich in ihrer unteren Einsatzstellung 33 befindet. Für gleiche Teile werden widerum gleiche Bezugszeichen bzw. Bauteilbezeichnungen wie in den vorangegangenen Figuren 1 bis 7 verwendet. Um unnötige Wiederholungen zu vermeiden, wird auf die detaillierte Beschreibung in den vorangegangenen Figuren 1 bis 7 hingewiesen bzw. Bezug genommen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Sockelelement | 31 | Sichtblende |
| 2 | Untergrund | 32 | obere Einsatzstellung |
| 3 | Gehäusemodul | 33 | untere Einsatzstellung |
| 4 | Selbstbedienungsautomat | 34 | Unterseite der Sichtblende |
| 5 | Tragerahmen | 35 | Fixierelement |
| 6 | Deckenabschnitt | 36 | schlitzartige Ausnehmung |
| 7 | Außenkante Deckenabschnitt | 37 | erstes Sichtblendensegment |
| 8 | Mantelabschnitt | 38 | zweites Sichtblendensegment |
| 9 | Biegelasche | 39 | Ausnehmung Fixierelement |
| 10 | Aufnahmefläche | 40 | Ausnehmung Befestigungselement Ankerbohrung |
| 11 | Eckstoß | | |
| 12 | thermische Fügeverbindung | 41 | Befestigungsinsert |
| 13 | Innenseite Tragerahmen | 42 | Bohrung in Mantelabschnitt |
| 14 | Außenseite Tragerahmen | 43 | Befestigungsmittel zum Verbinden von zwei Tragerahmen |
| 15 | Verstellfuß | | |
| 16 | Auflagekopf Verstellfuß | 44 | mit der Bohrung im Mantelabschnitt korrespondierende Seite |
| 17 | Unterseite Tragerahmen | | |
| 18 | U-Profil | 45 | Ausnehmung in Sichtblende |
| 19 | Bohrung in U-Profil | 46 | Durchlass |
| 20 | Gewindemutter | 47 | Ausnehmung an Unterseite der Sichtblende |
| 21 | Gewindeabschnitt Verstellfuß | | |
| 22 | Längsachse Stellfuß | 48 | Ausnehmung an Unterseite Tragerahmen |
| 23 | weitere Gewindemutter | | |
| 24 | Ausnehmung Verstellfuß | 49 | Höhe Sichtblende |
| 25 | Niederhalterelement | 50 | Lichte Höhe Tragerahmen |
| 26 | Fixierbohrung | 51 | Drehmomenten-Einleitungsbereich |
| 27 | Durchmesser Fixierbohrung | 52 | Ansatz |
| 28 | Durchmesser Auflagekopf | 53 | Fundamentsystem |
| 29 | Ankerbohrung | 54 | Betonkörper |
| 30 | Befestigungselement | 55 | Pflasterungselement |

## Patentansprüche

1. Sockelelement (1) zur lastabtragenden Aufnahme eines Gehäusemoduls (3) eines Selbstbedienungsautomaten (4), das Sockelelement (1) umfassend:
einen Tragerahmen (5), mit einem Deckenabschnitt (6) und allseitig an einer Außenkante (7) des Deckenabschnittes (6) ausgebildeten Mantelabschnitten (8), wobei der Deckenabschnitt (6) eine Aufnahmefläche (10) zur Aufnahme des Gehäusemoduls (3) aufweist und die Mantelabschnitte (8) der Aufnahmefläche (10) gegenüberliegend der Aufnahmefläche (10) am Deckenabschnitt (6) angeordnet sind;
zumindest drei Verstellfüße (15), welche an einer Unterseite (17) des Tragerahmens (5) angeordnet sind und zur Ausnivellierung des Tragerahmens (5) dienen, wobei ein Auflagekopf (16) der Verstellfüße (15) zur Auflage am Untergrund (2) ausgebildet ist;
eine Sichtblende (31), welche zum möglichst bündigen Abschluss des Sockelelementes (1) mit dem Untergrund (2) ausgebildet ist,
wobei die Sichtblende (31) an einer Innenseite (13) des Tragerahmens (5) angeordnet ist und relativ zum Tragerahmen (5) zwischen einer oberen Einsatzstellung (32) und einer unteren Einsatzstellung (33) verschiebbar ist,
**dadurch gekennzeichnet, dass**
am Tragerahmen (5) zumindest ein Fixierelement (35) zum Fixieren der Sichtblende (31) ausgebildet ist, wobei in der Sichtblende (31) eine schlitzartige Ausnehmung (36) ausgebildet ist, in welche das Fixierelement (35) eingreift.

2. Sockelelement nach Anspruch 1, **dadurch gekennzeichnet, dass** die Sichtblende (31) zumindest ein erstes Sichtblendensegment (37) und ein zweites Sichtblendensegment (38) umfasst, wobei die beiden Sichtblendensegmente (37, 38) unabhängig voneinander relativ zum Tragerahmen (5) verschiebbar sind.

3. Sockelelement nach Anspruch 1 oder 2, **dadurch gekennzeichnet, dass** der Tragerahmen (5) als Blechumformteil ausgebildet ist, wobei die Mantelabschnitte (8) als an den Deckenabschnitt (6) anschließende Biegelaschen (9) ausgebildet sind.

4. Sockelelement nach Anspruch 3, **dadurch gekennzeichnet, dass** die einzelnen Mantelabschnitte (8) an den Eckstößen (11) mittels einer thermischen Fügeverbindung (12), wie etwa einer Schweißverbindung, miteinander verbunden sind.

5. Sockelelement nach einem der vorhergehenden Ansprüche, **dadurch gekennzeichnet, dass** die Sichtblende (31) als Blechumformteil ausgebildet ist.

6. Sockelelement nach einem der vorhergehenden Ansprüche, **dadurch gekennzeichnet, dass** der Tragerahmen (5) an einem der Mantelabschnitte (8) zumindest eine Bohrung (42) zum Verbinden von zwei Tragerahmen (5) mittels einem Befestigungsmittel (43) aufweist, wobei die Sichtblende (31) an einer zum mit der Bohrung (42) versehenen Mantelabschnitt (8) korrespondierenden Seite (44) eine Ausnehmung (45) aufweist um sowohl in der oberen Einsatzstellung (32) als auch in der unteren Einsatzstellung (33) nicht mit dem Befestigungsmittel (43) zu kollidieren.

7. Sockelelement nach Anspruch 6, **dadurch gekennzeichnet, dass** an jenem Mantelabschnitt (8) in welchem die Bohrung (42) zum Verbinden von zwei Tragerahmen (5) angeordnet ist zusätzlich ein Durchlass (46) zur Durchführung von Kabel angeordnet ist.

8. Sockelelement nach einem der vorhergehenden Ansprüche, **dadurch gekennzeichnet, dass** der Deckenabschnitt (6) eine oder mehrere Ausnehmungen (24, 29, 40) aufweist durch welche zumindest die Verstellfüße (15) und/oder die Fixierelemente (35) zum Fixieren der Sichtblende (31) zugänglich sind.

9. Sockelelement nach einem der vorhergehenden Ansprüche, **dadurch gekennzeichnet, dass** die Sichtblende (31) an einer dem Untergrund (2) zuzuwendenden Unterseite (34) eine Ausnehmung (47) aufweist.

10. Sockelelement nach einem der vorhergehenden Ansprüche, **dadurch gekennzeichnet, dass** am Tragerahmen (5) ein U-Profil (18) angeordnet ist, welches eine Bohrung (19) zur Aufnahme der Verstellfüße (15) aufweist, wobei in der Bohrung (19) ein Gewinde ausgebildet ist oder mit dem U-Profil (18) eine Gewindemutter (20) verschweißt ist, und die Verstellfüße (15) durch Verdrehung bezüglich deren Längsachse (22) relativ zum U-Profil (18) und somit zum Tragerahmen (5) verstellbar sind.

11. Sockelelement nach einem der vorhergehenden Ansprüche, **dadurch gekennzeichnet, dass** ein Niederhalterelement (25) ausgebildet ist, welches zumindest eine Fixierbohrung (26) aufweist in welche einer der Verstellfüße (15) einbringbar ist, wobei ein Durchmesser (27) der Fixierbohrung (26) kleiner ist als ein Durchmesser (28) des Auflagekopfes (16) und wobei das Niederhalterelement (25) eine Ankerbohrung (29) aufweist, in welche ein Befestigungselement (30) einbringbar ist, wodurch das Niederhalterelement (25) am Untergrund (2) fixierbar ist.

12. Sockelelement nach Anspruch 11, **dadurch gekennzeichnet, dass** das Niederhalterelement (25) zwei Fixierbohrungen (26) aufweist, welche derart am Niederhalterelement (25) angeordnet sind, dass sie jeweils mit einem Verstellfuß (15) zusammenwirken und dass die Ankerbohrung (29) zwischen den beiden Fixierbohrungen (26) angeordnet ist.

13. Fundamentsystem (53) zur lastabtragenden Aufnahme eines Gehäusemoduls (3) eines Selbstbedienungsautomaten (4) mit einem Betonkörper (54) und einem auf dem Betonkörper (54) angeordneten Sockelelement (1), **dadurch gekennzeichnet, dass** das Sockelelement (1) nach einem der vorhergehenden Ansprüche ausgebildet ist.

## Claims

1. A socket element (1) for receiving a housing module (3) of a self-service machine (4) in a load-bearing manner, the socket element (1) comprising:
a support frame (5), with a cover section (6) and shell sections (8) formed on all sides on an outer edge (7) of the cover section (6), wherein the cover section (6) has a receiving surface (10) for receiving the housing module (3) and the shell sections (8) of the receiving surface (10) are arranged on the cover section (6) opposite to the receiving surface (10);
at least three adjusting feet (15), which are arranged on a bottom side (17) of the support frame (5) and serve to level the support frame (5), wherein a support head (16) of the adjusting feet (15) is formed to rest on the ground (2);
a screen (31), which is designed to ensure that the socket element (1) is as flush as possible with the ground (2),
wherein the screen (31) is arranged on an inner side (13) of the support frame (5) and is displaceable relative to the support frame (5) between an upper operational position (32) and a lower operational position (33),
**characterized in that**
at least one fixing element (35) for fixing the screen (31) is formed on the support frame (5), wherein a slot-like recess (36), in which the fixing element (35) engages, is formed in the screen (31).

2. The socket element according to claim 1, **characterized in that** the screen (31) comprises at least one first screen segment (37) and a second screen segment (38), wherein the two screen segments (37, 38) are displaceable relative to the support frame (5) independently of one another.

3. The socket element according to claim 1 or 2, **characterized in that** the support frame (5) is formed as a sheet metal deformation part, wherein the shell sections (8) are formed as bending lugs (9) adjoining the cover section (6).

4. The socket element according to claim 3, **characterized in that** the individual shell sections (8) are connected to one another on the corner joints (11) by means of a thermal joining connection (12), such as a weld connection.

5. The socket element according to one of the preceding claims, **characterized in that** the screen (31) is formed as a sheet metal deformation part.

6. The socket element according to one of the preceding claims, **characterized in that** the support frame (5) on one of the shell sections (8) comprises at least one bore (42) for connecting two support frames (5) by means of a fastening means (43), wherein the screen (31) comprises a recess (45) on a side (44) corresponding to the shell section (8) provided with the bore (42) so as to collide with the fastening means (43) neither in the upper operational position (32) nor in the lower operational position (33).

7. The socket element according to claim 6, **characterized in that** a feedthrough (46) for the passage of cables is additionally arranged on that shell section (8) in which the bore (42) for connecting two support frames (5) is arranged.

8. The socket element according to one of the preceding claims, **characterized in that** the cover section (6) comprises one or several recesses (24, 29, 40) through which at least the adjusting feet (15) and/or the fixing elements (35) are accessible for fixing the screen (31).

9. The socket element according to one of the preceding claims, **characterized in that** the screen (31) comprises a recess (47) on a bottom side (34) facing the ground (2).

10. The socket element according to one of the preceding claims, **characterized in that** a U-profile (18), which comprises a bore (19) for receiving the adjusting feet (15), is arranged on the support frame (5), wherein a thread is formed in the bore (19) or a threaded nut (20) is welded to the U-profile (18), and the adjusting feet (15) are adjustable by rotation with respect to their longitudinal axis (22) relative to the U-profile (18) and thus to the support frame (5).

11. The socket element according to one of the preceding claims, **characterized in that** a hold-down element (25) is formed, which comprises at least one fixing bore (26) into which one of the adjusting feet (15) can be inserted, wherein a diameter (27) of the fixing bore (26) is smaller than a diameter (28) of the support head (16) and wherein the hold-down element (25) comprises an anchor bore (29) into which a fastening element (30) can be inserted, whereby the hold-down element (25) can be fixed to the ground (2).

12. The socket element according to claim 11, **characterized in that** the hold-down element (25) comprises two fixing bores (26), which are arranged such on the hold-down element (25) that they each cooperate with an adjusting foot (15) and that the anchor bore (29) is arranged between the two fixing bores (26).

13. A foundation system (53) for receiving a housing module (3) of a self-service machine (4) in a load-bearing manner having a concrete body (54) and having a socket element (1) arranged on the concrete body (54), **characterized in that** the socket element (1) is designed according to one of the preceding claims.

## Revendications

1. Elément socle (1) destiné à recevoir avec transfert de charge un module de boîtier (3) d'un distributeur automatique (4), l'élément socle (1) comprenant :
un cadre de support (5), avec un tronçon de couverture (6) et des tronçons d'enveloppe (8) constitués de tous côtés sur une arête extérieure (7) du tronçon de couverture (6), le tronçon de couverture (6) comportant une surface de réception (10) destinée à la réception du module de boîtier (3), et les tronçons d'enveloppe (8) de la surface de réception (10) étant disposés en face de la surface de réception (10) sur le tronçon de couverture (6) ;
au moins trois pieds de réglage (15), lesquels sont disposés sur un côté inférieur (17) du cadre de support (5) et servent à la mise à niveau du cadre de support (5), une tête d'appui (16) des pieds de réglage (15) étant constituée pour l'appui sur la base (2) ;
un cache (31), lequel est constitué pour que l'élément socle (1) se termine autant que possible en affleurement avec la base (2),
le cache (31) étant disposé sur un côté intérieur (13) du cadre de support (5) et pouvant être déplacé relativement au cadre de support (5) entre une position d'utilisation supérieure (32) et une position d'utilisation inférieure (33),
**caractérisé en ce**
**qu'**au moins un élément de fixation (35) destiné à la fixation du cache (31) est constitué sur le cadre de support (5), un creux (36) du type fente étant constitué sur le cache (31) et l'élément de fixation (35) engrenant dans ce creux.

2. Elément socle selon la revendication 1, **caractérisé en ce que** le cache (31) comprend au moins un premier segment de cache (37) et un deuxième segment de cache (38), les deux segments de cache (37, 38) pouvant être déplacés indépendamment l'un de l'autre relativement au cadre de support (5).

3. Elément socle selon la revendication 1 ou 2, **caractérisé en ce que** le cadre de support (5) est constitué en tant que pièce façonnée en tôle, les tronçons d'enveloppe (8) étant constitués en tant que languettes flexibles (9) se raccordant au tronçon de couverture (6).

4. Elément socle selon la revendication 3, **caractérisé en ce que** les tronçons d'enveloppe (8) individuels sont raccordés les uns aux autres au niveau des jonctions en angle (11) au moyen d'une liaison d'assemblage (12) thermique, comme une liaison soudée par exemple.

5. Elément socle selon l'une des revendications précédentes, **caractérisé en ce que** le cache (31) est constitué en tant que pièce façonnée en tôle.

6. Elément socle selon l'une des revendications précédentes, **caractérisé en ce que** le cadre de support (5) comporte sur l'un des tronçons d'enveloppe (8) au moins un alésage (42) destiné au raccordement de deux cadres de support (5) au moyen d'un moyen de fixation (43), le cache (31) comportant, sur un côté (44) correspondant au tronçon d'enveloppe (8) muni de l'alésage (42), un creux (45) pour ne pas entrer en collision avec le moyen de fixation (43) aussi bien dans la position d'utilisation supérieure (32) que dans la position d'utilisation inférieure (33).

7. Elément socle selon la revendication 6, **caractérisé en ce que**, sur le tronçon d'enveloppe (8) dans lequel est disposé l'alésage (42) pour le raccordement de deux cadres de support (5), il est disposé en plus un conduit (46) pour le passage de câble.

8. Elément socle selon l'une des revendications précédentes, **caractérisé en ce que** le tronçon de couverture (6) comporte un ou plusieurs creux (24, 29, 40) à travers lesquels les pieds de réglage (15) et/ou les éléments de fixation (35) pour la fixation du cache (31) sont accessibles.

9. Elément socle selon l'une des revendications précédentes, **caractérisé en ce que** le cache (31) comporte un creux (47) sur un côté inférieur (34) devant être tourné vers la base (2).

10. Elément socle selon l'une des revendications précédentes, **caractérisé en ce que**, sur le cadre de support (5), il est disposé un profilé en U (18) qui comporte un alésage (19) destiné à la réception des pieds de réglage (15), un filetage étant constitué dans l'alésage (19), ou un écrou fileté (20) étant assemblé par soudage au profilé en U (18), et les pieds de réglage (15) pouvant être réglés par rotation par rapport à leur axe longitudinal (22) relativement au profilé en U (18) et donc au cadre de support (5).

11. Elément socle selon l'une des revendications précédentes, **caractérisé en ce qu'**il est constitué un élément de retenue (25) qui comporte au moins un alésage de fixation (26) dans lequel peut être introduit un des pieds de réglage (15), un diamètre (27) de l'alésage de fixation (26) étant plus petit qu'un diamètre (28) de la tête d'appui (16), et l'élément de retenue (25) comportant un alésage d'ancrage (29) dans lequel un élément de fixation (30) peut être introduit, ce qui fait que l'élément de retenue (25) peut être fixé sur la base (2).

12. Elément socle selon la revendication 11, **caractérisé en ce que** l'élément de retenue (25) comporte deux alésages de fixation (26) qui sont disposés sur l'élément de retenue (25) de telle sorte qu'ils coopèrent respectivement avec un pied de réglage (15) et que l'alésage d'ancrage (29) est disposé entre les deux alésages de fixation (26).

13. Système de fondation (53) destiné à recevoir avec transfert de charge un module de boîtier (3) d'un distributeur automatique (4), avec un corps en béton (54) et un élément socle (1) disposé sur le corps en béton (54), **caractérisé en ce que** l'élément socle (1) est constitué selon l'une des revendications précédentes.
